# EUROPÄISCHE PATENTSCHRIFT

(11) **EP 0 759 670 B1**
(45) Veröffentlichungstag und Bekanntmachung des Hinweises auf die Patenterteilung: **26.10.2005**
(21) Anmeldenummer: 96112783.4
(22) Anmeldetag: 07.08.1996
(51) Int. Cl.: H04L 29/06, H04Q 7/24

(54) **Verfahren zur Übertragung von Meldungen zwischen Telekommunikationsnetzen**
Method for transmitting messages between telecommunications networks
Méthode de transmission de messages entre réseaux de télécommunications

(30) Priorität: 21.08.1995 DE 19530675
(43) Veröffentlichungstag der Anmeldung: 26.02.1997
(73) Patentinhaber: SIEMENS AKTIENGESELLSCHAFT, 80333 München (DE)
(72) Erfinder: Reininghaus, Georg, Dipl.-Ing., 1130 Wien (AT)

(56) Entgegenhaltungen:
- EUROPEAN TELECOMMUNICATIONS STANDARDS INSTITUTE: "ETS 300 374-1; Intelligent Network (IN); Intelligent Network Capability Set 1 (CS1); Core Intelligent Network Application Protocol (INAP); Part 1: Protocol Specification" XX, September 1994 (1994-09), Seite 1-56, 180-191 XP002262947
- SKOLT E ET AL: "INTELLIGENT NETWORKS AS A PLATFORM FOR PROVISION OF SERVICE IN GSM AND DECT" TELEKTRONIKK, XX, XX, Bd. 91, Nr. 4, 1995, Seiten 82-87, XP000605908 ISSN: 0085-7130
- INTERNATIONAL TELECOMMUNICATION UNION: "ITU-T Recommendation Q.771 - Signaling System No. 7 - Functional Description of Transaction Capabilities " XX, März 1993 (1993-03), Seiten 1-33, XP002262948
- INTERNATIONAL TELECOMMUNICATION UNION: "ITU-T Recommendation Q.772 - Signaling System No. 7 - Transaction Capabilities Information Element Definitions" XX, März 1993 (1993-03), Seite 1-7 XP002262949

## Beschreibung

Die Erfindung betrifft ein Verfahren zur Übertragung von Meldungen zwischen Telekommunikationsnetzen mit offenen Schnittstellen gemäß einem genormten Übertragungsprotokoll nach dem Oberbegriff des Patentanspruchs 1.

Dokument D1 (European Telecommunications Standards Institute: ETS 300 374-1; Intelligent Network (IN); Intelligent Network Capability Set 1 (CS 1); Cre Intelligent Network Application Protocol (INAP); Part 1: Protocol Specification XX, September 1994 (1994-09), Seite 1-56, 180-191 XP002262947) definiert das INAP-Protokoll (Intelligent Network Application Protocol), das für die Unterstützung des CS1 (Capability Set 1) benötigt wird. Es unterstützt Interaktionen zwischen den drei funktionalen Elementen SSF (Service Switching Function), SCF (Service Control Function) und SRF (Specialized Resource Function), so wie es im IN-Funktional-Modell (Intelligent Network functional model) definiert ist. Damit soll das INAP-Protokoll für ISDN- und PSTN-Netze weiter entwickelt werden.

Dokument D2 (Skolt E et al.: Intelligent Networks as a Platform for Provision of Service in GSM and DECT Telektronikk, XX, XX, Bd. 91, Nr. 4, 1995, Seiten 82-87, XP000605908, ISSN: 0085-7130) bezieht sich auf personenbezogene Kommunikationscharakteristika, wie die Endgerät-Mobilität, die Nutzer Mobilität, die Dienst Mobilität und ein Nutzerspezifisches Dienstangebot. In diesem Zusammenhang wird die Verwendung von intelligente Netze - (IN) Konzepten für die Versorgung mit Diensten in GSM-Netzen und DECT-Netzen diskutiert.

Dokument D3 (International Telecommunication Union: ITU-T Recommendation Q.771 - Signaling System No. 7 - Functional Description of Transaction Capabilities XX, März 1993 (1993-03), Seiten 1-33, XP002262948) beschreibt die sogenannten Transaction Capabilities (TC), mit denen es möglich ist, Funktionen und Protokolle bereitzustellen für eine große Vielfalt von Applikationen, die über Schaltelemente (Switches) und spezielle Netzelemente (zum Beispiel Datenbanken) in Telekommunikationsnetzen verteilt werden. Transaction Capabilities bezieht sich auf ein Set von Kommunikationsfähigkeiten, die eine Schnittstelle zwischen den Applikationen und dem Network-Layer-Service bereitstellen.

Telekommunikationsnetze mit offenen Schnittstellen, zwischen denen Meldungen gemäß einem üblicherweise genormten Übertragungsprotokoll ausgetauscht werden, finden zunehmend Verbreitung. Es ist dabei die Tendenz zu erkennen, daß die Netzbetreiber der Telekommunikationsnetze zusätzlich zu den genormten Diensten eigene Dienste den Netzteilnehmern individuell anbieten wollen. Dies erfordert Erweiterungen des genormten Übertragungsprotokolls an den Schnittstellen. Protokollerweiterungen, die über Netzgrenzen hinaus genutzt werden sollen, können jedoch Konflikte zwischen den Anforderungen verschiedener Netzbetreiber hervorrufen. Eine Möglichkeit, die Konflikte, die zu Protokollfehlern oder Fehlinterpretationen der Meldungen führen können, zu vermeiden, besteht darin, bei Empfang der Meldungen die Protokollerweiterung von vornherein entweder zu ignorieren oder abzulehnen. Auch eine empfangsseitige Unterscheidung zwischen einer unbekannten Protokollerweiterung und einem Protokollfehler ist sicherzustellen. Es ist aus "Draft Recommendations Adopted For Approval (X.680 , ...)", International Telecommunication Union (ITU), COM 7-R 25-E, März 1994, Seiten 38-39 und 68-69 und aus "Specification of signalling system no. 7, transaction capabilities (TC)", International Telecommunication Union (ITU)-T Recommendation Q.772, Seite 15 und Q.774, Seiten 18-20 (White Book 1993) eine Protokollkennung (object identifier) bekannt, durch die das jeweilige genormte Übertragungsprotokoll identifiziert werden kann. Diese Protokollkennung wird üblicherweise der Meldung vorangestellt und entweder vor oder zusammen mit der Meldung zwischen den Telekommunikatonsnetzen übertragen.

Es ist Aufgabe der Erfindung, ein Verfahren der eingangs genannten Art derart auszugestalten, daß bei Empfang der Meldungen in den einzelnen Telekommunikationsnetzen die Protokollerweiterungen eines genormten Übertragungsprotokolls mit möglichst wenig Aufwand eindeutig erkannt werden können.

Diese Aufgabe wird gemäß der Erfindung durch die Merkmale des Patentanspruchs 1 gelöst. Weiterbildungen der Erfindung sind in Unteransprüchen angegeben.

Zusätzlich zur Protokollkennung für die Identifikation des genormten Übertragungsprotokolls wird in einem erweiterten Teil der Meldung mindestens eine Zusatzprotokollkennung zur Identifikation einer individuellen Protokollerweiterung dieses Übertragungsprotokolls übertragen. Die Protokollkennung zusammen mit der individuellen Zusatzprotokollkennung erlaubt die eindeutige Identifikation von Protokollerweiterungen für ein bestimmtes Übertragungsprotokoll mit sehr einfachen Mitteln. Bei dem Dialog zum Austausch von Meldungen zwischen Telekommunikationsnetzen können bei Akzeptanz der Protokollkennung individuelle Protokollerweiterungen durch entsprechende Zusatzprotokollkennungen in derselben Meldung sicher erkannt und deren Nutzung damit gegenseitig vereinbart werden.

Es ist von Vorteil, wenn im erweiterten Teil der Meldung verschiedene Zusatzprotokollkennungen zur Identifikation mehrerer Protokollerweiterungen gemeinsam übertragen werden.

Es ist auch von Vorteil, wenn im erweiterten Teil der Meldung der Erweiterungstyp der Protokollerweiterung mit der Zusatzprotokollkennung übertragen wird.

Weiterhin ist es von Vorteil, wenn von einem Empfänger der Meldung die Protokollkennung des Übertragungsprotokolls überprüft und bei deren Kenntnis die Zusatzprotokollkennung ausgewertet wird.

Gemäß Weiterbildungen der Erfindung wird bei bekannter Zusatzprotokollkennung der Erweiterungstyp der Protokollerweiterung überprüft und bei positivem Prüfungsergebnis angenommen, während bei Nicht-Kenntnis der Zusatzprotokollkennung der Erweiterungstyp der Protokollerweiterung abgelehnt oder übergangen wird.

Gemäß anderer Weiterbildungen der Erfindung enthält die Zusatzprotokollkennung eine Erweiterungskennung zur Festlegung des Erweiterungstyps und eine Betreiberkennung zur Identifikation des Netzbetreibers eines Telekommunikationsnetzes, der die Protokollerweiterung veranlaßt hat.

Von besonderem Vorteil ist es, wenn durch die Protokollkennung das Basis-Übertragungsprotokoll eines länderübergreifenden Mobilfunknetzes und durch die Betreiberkennung der Netzbetreiber des Mobilfunknetzes im jeweiligen Land identifiziert werden.

Die Zusatzprotokollkennung ist vorzugsweise ein einfacher ganzzahliger Code, der mehrere Stellen umfaßt. Dadurch lassen sich mehrere Protokollerweiterungen in dem erweiterten Teil der Meldung mit besonders geringem Aufwand übertragen und eindeutig unterscheiden.

Die Erfindung wird anhand eines in Figuren dargestellten Ausführungsbeispiels näher erläutert.

Im einzelnen zeigen
- Figur 1: die Struktur einer erweiterten Meldung zur Identifikation von individuellen Protokollerweiterungen,
- Figur 2: ein Ablaufdiagramm zur Behandlung der erweiterten Meldung für das Basis-Übertragungsprotokoll eines Mobilfunknetzes und
- Figur 3: eine Tabelle mit Beispielen für Zusatzprotokollkennungen zur Identifikation der individuellen Protokollerweiterungen.

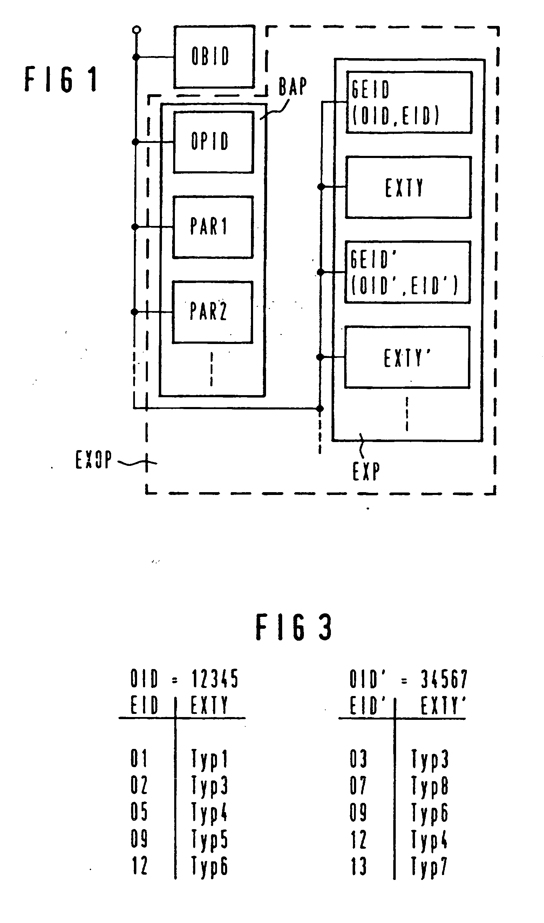

Figur 1 zeigt in einem Blockschaltbild die Struktur einer erweiterten Meldung EXOP, die einen Basisteil BAP und einen erweiterten Teil EXP aufweist. Die Meldung EXOP wird zwischen Telekommunikationsnetzen mit offenen Schnittstellen gemäß einem genormten Übertragungsprotokoll übertragen, das beispielsweise aus dem Basis-Übertragungsprotokol zur Übertragung von Sprache und Daten in einem länderübergreifenden digitalen zellular aufgebauten Mobilfunknetz nach dem GSM-Standard (Global System for Mobile Commmunication) besteht. Das Basis-Übertragungsprotokoll (Mobile Application Part, MAP) wird dabei durch eine Protokollkennung OBID identifiziert, die der Meldung EXOP vorangestellt ist. Diese Protokollkennung OBID wird vor der Meldung EXOP oder zusammen mit der Meldung EXOP gesendet, um für jeden Dialog zwischen Telekommunikationsnetzen ein gemeinsam nutzbares Basis-Übertragungsprotokoll vereinbaren zu können. Durch die Protokollkennung OBID wird außer dem genormten Übertragungsprotokoll auch dessen Eigentümer definiert, beispielsweise ein Normungsgremium wie ETSI (European Telecommunication Standard Institute) zur Normierung des Übertragungsprotokolls für das GSM-Mobilfunknetz.

Der Basisteil (BAP) der Meldung EXOP weist eine Meldungskennung OPID und Meldungsparameter PAR1, PAR2.... auf. Dabei wird zwischen verschiedenen Parametertypen, die den Meldungsparametern PAR1, ... zugeordnet sind, unterschieden. Für den Fall, daß Erweiterungen des genormten Übertragungsprotokolls - beispielsweise aufgrund von zusätzlichen Diensten der Netzbetreiber - erforderlich sind, werden die individuellen Erweiterungen innerhalb der Meldung EXOP in dem erweiterten Teil EXP durch entsprechende Zusatzprotokollkennungen eindeutig identifiziert. Durch das Mitsenden eigener Zusatzprotokollkennungen in der jeweiligen Meldung zur Identifikation individueller Erweiterungen des genormten Übertragungsprotokolls sind gegenseitige Absprachen zwischen Netzbetreibern zur Vereinbarung eines gemeinsam verständlichen Übertragungsprotokolls einschließlich der individuellen Erweiterungen entbehrlich. Insbesondere wenn mehrere Netzbetreiber eine gegenseitige Nutzung ihrer individuellen Protokollerweiterungen vereinbaren müssen, ist durch Kombination der Protokollkennung OBID mit der Zusatzprotokollkennung innerhalb der Meldung EXOP mit einfachen Mitteln eine schnelle und eindeutige Kennzeichnung der zusätzlich zum genormten Übertragungsprotokoll hinzukommenden individuellen Erweiterungen für dieses Übertragungsprotokoll möglich.

Im erweiterten Teil EXP der Meldung EXOP ist eine Zusatzprotokollkennung GEID zur Identifikation einer ersten Erweiterung des Übertragungsprotokolls sowie eine Zusatzprotokollkennung GEID' zur Identifikation einer zweiten Erweiterung des Übertragungsprotokolls eingetragen. Dabei verfügt jede Zusatzprotokollkennung GEID, GEID' über eine Kennung, die jeweils den Eigentümer der individuellen Protokollerweiterung beschreibt. Im vorliegenden Beispiel besteht diese Kennung aus einer Betreiberkennung OID bzw. OID', die den Netzbetreiber des länderübergreifenden Mobilfunknetzes im jeweiligen Land als Urheber der Protokollerweiterung identifiziert. Darüber hinaus wird in der Zusatzprotokollkennung GEID bzw. GEID' eine Erweiterungskennung EID bzw. EID' übertragen, durch die der Erweiterungstyp der jeweiligen Protokollerweiterung festgelegt ist. Die Zusatzprotokollkennung GEID, GEID' kann somit als universelle Kennung aufgefaßt werden, die aus einer einfachen Erweiterungskennung EID, EID' und aus einer individuellen Betreiberkennung OID, OID' zusammengesetzt ist. Der Erweiterungstyp EXTY bzw. EXTY' der ersten bzw. zweiten Protokollerweiterung wird ebenfalls im erweiterten Teil EXP der Meldung EXOP zusammen mit der Zusatzprotokollkennung GEID bzw. GEID' übertragen. Dabei ist für jede Zusatzprotokollkennung GEID bzw. GEID' jeweils die Erweiterungskennung EID bzw. EID' einem Erweiterungstyp EXTY bzw. EXTY' eindeutig zugeordnet.

Die Zusatzprotokollkennung GEID, GEID' weist durch Verwendung eines ganzzahligen, aus mehreren Stellen eines Codes bestehenden Werts eine einfache Struktur auf, so daß mehrere individuelle Protokollerweiterungen des genormten Übertragungprotokolls in eine einzige Meldung eingefügt und gleichzeitig übertragen werden können. Die einfache Struktur ist beispielsweise gegeben durch einen binären Code, der sich aus drei Bitstellen eines mobilen Ländercodes (Mobile Country Code) und aus zwei Bitstellen eines mobilen Netzcodes (Mobile Network Code) zusammensetzt. Auch die Betreiberkennung OID bzw. OID' besteht aus einem Code. Er umfaßt beispielsweise zwei Bitstellen, wodurch jedem einzelnen Netzbetreiber weitere Kennungen zur Vergabe an Diensteanbieter, die individuelle Protokollerweiterungen wünschen, im Netz zur Verfügung stehen.

Der Empfänger der Meldung EXOP mit einer oder mehreren individuellen Protokollerweiterungen kann aufgrund der mitgesandten Zusatzprotokollkennungen GEID, GEID' eine Entscheidung treffen, welche der Protokollerweiterungen bekannt und damit sowohl vom Sender als auch vom Empfänger der Meldung zusätzlich zum Basis-Protokoll nutzbar sind. Nicht bekannte Protokollerweiterungen können vom Empfänger der Meldung EXOP abgelehnt oder verworfen werden. Dabei prüft der Empfänger zunächst die Protokollkennung OBID des Basis-Übertragungsprotokolls (MAP), bevor die eigentliche Meldung eintrifft. Bei Kenntnis der Protokollkennung OBID können die Meldungsparameter PAIR1, PAIR2 ... , die Anteile des Basis-Übertragungsprotokolls enthalten, verarbeitet werden. Danach wertet der Empfänger die eintreffende Meldung EXOP auf das Vorliegen des erweiterten Teils EXP aus und vergleicht die darin übertragenen Zusatzprotokollkennungen GEID, GEID' mit Protokollkennungen, die für dieses Basis-Übertragungsprotokoll bekannt sind. Die für das genormte Übertragungsprotokoll bekannten Kennungen sind in einer Liste oder Tabelle eingetragen, die für den Vergleich zur Verfügung steht. Ist die empfangene Zusatzprotokollkennung GEID, GEID' bekannt, wird auch der Erweiterungstyp EXTY, EXTY' der Protokollerweiterung nach Überprüfung eindeutig erkannt und angenommen. Bei unbekannter Zusatzprotokollkennung GEID, GEID' wird der Erweiterungstyp EX-TY, EXTY' abgelehnt oder wahlweise auch übergangen. Dieser Vorgang wird vom Empfänger der Meldung EXOP wiederholt ausgeführt, bis der gesamte Inhalt der empfangenen Meldung EXOP und alle im erweiterten Teil EXP der Meldung EXOP enthaltenen und durch die Zusatzprotokollkennungen identifizierten Protokollerweiterungen überprüft sind. Ein vorzeitiges Ende des Vorgangs erfolgt dann, wenn die Prüfung ergibt, daß eine individuelle Protokollerweiterung aus obengenannten Gründen abgelehnt worden ist.

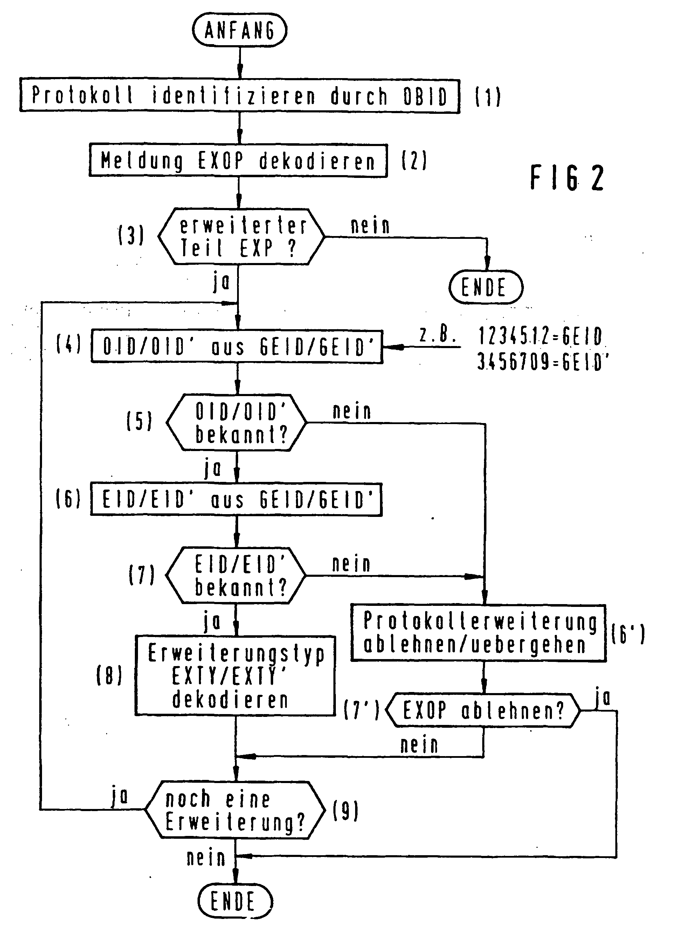

Figur 2 zeigt ein Ablaufdiagramm zur Behandlung einer bei einem Empfänger eintreffenden Meldung mit einem erweiterten Teil, in dem individuelle Erweiterungen des Übertragungsprotokolls identifiziert werden. Das zur Übertragung zwischen Telekommunikationsnetzen mit offenen Schnittstellen verwendete genormte Übertragungsprotokoll (MAP) wird durch die Protokollkennung OBID zunächst identifiziert (1), bevor die Meldung EXOP dekodiert werden kann (2). Die dekodierte Meldung EXOP wird auf das Vorhandensein des erweiterten Teils EXP überprüft (3). Für den Fall, daß die Meldung EXOP den erweiterten Teil EXP nicht aufweist, ist die Auswertung der Meldung beendet.

Wenn die Meldung EXOP jedoch den erweiterten Teil EXP enthält, wird der erweiterte Teil EXP auf das Vorliegen einer oder mehrerer Zusatzprotokollkennungen ausgewertet. Im vorliegenden Beispiel wird im erweiterten Teil EXP der Meldung eine erste Zusatzprotokollkennung GEID übertragen, die beispielsweise den Wert GEID=1234512 aufweist. Aus der Zusatzprotokollkennung GEID ist die Betreiberkennung OID entnehmbar, durch die der Netzbetreiber des länderübergreifenden Mobilfunknetzes in einem bestimmten Land, der die Protokollerweiterung veranlaßt hat, identifiziert wird. Im vorliegenden Beispiel besteht die Betreiberkennung OID aus einem ganzzahligen (integer) dezimalen Code 12345. Die Betreiberkennung OID erhält man durch Auswertung der ersten fünf Stellen der Zusatzprotokollkennung GEID (4).

Anschließend wird überprüft, ob die ermittelte Betreiberkennung OID bekannt ist (5), und bei Kenntnis die Erweiterungskennung EID aus der Zusatzprotokollkennung GEID ausgelesen. Die Erweiterungskennung EID weist im vorliegenden Beispiel den aus zwei Stellen bestehenden ganzzahligen (integer) dezimalen Code 12 auf (6). Daraufhin wird überprüft, ob die ermittelte Erweiterungskennung EID bekannt ist. Bei bekannter Erweiterungskennung EID erfolgt eine Dekodierung des Erweiterungstyps EXTY der Protokollerweiterung, der zusammen mit der Zusatzprotokollkennung im erweiterten Teil der Meldung übertragen worden ist (8). Für den Fall, daß eine der beiden Überprüfungen in (5) und (7) ergibt, daß entweder die Betreiberkennung OID oder die Erweiterungskennung EID unbekannt ist, wird die in der Meldung enthaltene Protokollerweiterung abgelehnt oder übergangen (6*'*). Im Anschluß daran wird abgefragt, ob die gesamte Meldung EXOP abgelehnt werden soll (7*'*). Bei Ablehnung ist die Behandlung der empfangenen Meldung beendet.

Im Anschluß an die Dekodierung des Erweiterungstyps EXTY (8) oder im Anschluß an ein negatives Ergebnis der Abfrage, ob die Meldung EXOP abgelehnt werden soll (7*'*), erfolgt die Überprüfung der empfangenen Meldung auf das Vorliegen einer zusätzlichen Protokollerweiterung (9). Wenn dies nicht der Fall ist, wird die Behandlung der Meldung beendet. Liegt jedoch noch eine individuelle Erweiterung des Übertragungsprotokolls vor, setzt sich die Auswertung der empfangenen Meldung fort. Es wird die weitere Zusatzprotokollkennung GEID*'* im erweiterten Teil der Meldung aufgefunden, durch die die zweite Protokollerweiterung identifiziert wird. Im vorliegenden Beispiel besteht die Zusatzprotokollkennung GEID*'* aus dem Wert GEID*'*=3456709. Dies bedeutet, daß die Betreiberkennung OID*'* den Wert 34567 und die Erweiterungskennung EID*'* den Wert 09 annehmen. Bei positiven Anworten auf die Überprüfung der ermittelten Betreiberkennung OID (5) und der ermittelten Erweiterungskennung EID*'* (7) wird der zugehörige Erweiterungstyp EXTY*'* der individuellen Protokollerweiterung dekodiert (8). Die Auswertung des erweiterten Teils der empfangenen Meldung auf das Vorliegen weiterer Zusatzprotokollkennungen zur Identifikation von weiteren individuellen Erweiterungen des Übertragungsprotokolls wird entsprechend den Schritten (4) bis (8) bzw. den Schritten (6') und (7') wiederholt ausgeführt, bis alle in der Meldung enthaltenen individuellen Protokollerweiterungen geprüft sind. Ein vorzeitiges Ende der Auswertung erfolgt dann, wenn die individuelle Protokollerweiterung auf Grund einer unbekannten Betreiberkennung bzw. einer unbekannten Erweiterungskennung abgelehnt wird. Bei Kenntnis der Betreiberkennung und der Erweiterungskennung in der Zusatzprotokollkennung erfolgt die Annahme der individuellen Protokollerweiterung, so daß der zusammen mit der Zusatzprotokollkennung übertragene Erweiterungstyp zwischen Sender und Empfänger der Meldung als vereinbart gilt.

Figur 3 zeigt eine Tabelle mit Werten für die Zusatzprotokollkennungen zur Identifikation der individuellen Protokollerweiterungen gemäß dem Beispiel in Figur 2. Die Zusatzprotokollkennung zur Identifikation der ersten individuellen Protokollerweiterung enthält als Betreiberkennung OID den Wert 12345 und als Erweiterungskennung EID den Wert 12. Gemäß der Tabelle ergibt sich daraus für den Erweiterungstyp EXTY ein Typ6. Anderen Erweiterungskennungen EID werden andere Erweiterungstypen EXTY in der Tabelle zugeordnet. So legt eine Erweiterungskennung EID=01 den Erweiterungstyp EXTY zu Typ1, eine Erweiterungskennung EID=02 den Erweiterungstyp EXTY zu Typ3, eine Erweiterungskennung EID=05 den Erweiterungstyp EX-TY zu Typ4 und eine Erweiterungskennung EID=09 den Erweiterungstyp EXTY zu Typ 5 fest.

Die Tabelle enthält außerdem die Zusatzprotokollkennung für die zweite individuelle Protokollerweiterung, die durch den Wert OID*'*=34567 für die Betreiberkennung und den Wert EID*'*=09 für die Erweiterungskennung definiert ist. Daraus ergibt sich als Erweiterungstyp EXTY*'* ein Wert vom Typ 4. Die Zuordnung der Erweiterungskennung EID*'* zum Erweiterungstyp EXTY*'* für die Betreiberkennung OID*'* ergibt bei dem Wert OID*'*=03 den Typ3, bei dem Wert OID*'*=07 den Typ8, bei dem Wert OID*'*=09 den Typ6 und bei dem Wert 13 den Typ7. Die Erweiterungstypen, mit denen Protokollelemente oder Protokollabschnitte des jeweiligen Übertragungsprotokolls beschrieben werden, umfassen sowohl Zeichen (character string) als auch Zahlen (integer) oder beliebige andere im Basis-Übertragungsprotokoll zulässige einfache oder konstruierte Typen (choice, sequence, set). Das Übertragungsprotokoll einschließlich seiner Protokollerweiterungen mit den festgelegten Erweiterungstypen wird in Form einer abstrakten Syntax definiert, von der die ASN.1-Syntax (Abstract Syntax Notation One) eine bekannte Darstellungsform ist. Eine Beschreibung dieser grundlegenden Notation ist beispielsweise aus *"*Specification of abstract syntax notation one (ASN.1)*"*, ITU-T Recommendations X.680 to X.683 (1994) bekannt.

## Patentansprüche

1. Verfahren zur Übertragung von Meldungen (EXOP) zwischen Telekommunikationsnetzen mit individuellen Erweiterungen des Übertragungsprotokolls mit offenen Schnittstellen gemäß einem genormten Übertragungsprotokoll, das durch eine Protokollkennung (OBID) identifiziert wird, die der Meldung (EXOP) vorangestellt und vor ihr oder zusammen mit ihr gesendet wird,
**dadurch gekennzeichnet,**
**daß** in einem erweiterten Teil (EXP) der Meldung (EXOP) mindestens eine Zusatzprotokollkennung (GEID, GEID') übertragen wird, durch die jeweils eine individuelle Erweiterung des durch die Protokollkennung (OBID) festgelegten Übertragungsprotokolls identifiziert wird,
wobei die Zusatzprotokollkennung (GEID, GEID') eine universelle Kennung ist, die aus einer einfachen Erweiterungskennung (EID, EID') und aus einer individuellen Betreiberkennung (OID, OID') zusammengesetzt ist,
wobei anschließend überprüft wird, ob die ermittelte Betreiberkennung (OID) bekannt ist, und bei Kenntnis die Erweiterungskennung (EID) aus der Zusatzprotokollkennung (GEID) ausgelesen wird,
wobei für den Fall, dass die Betreiberkennung (OID) unbekannt ist, die in der Meldung enthaltene Protokollerweiterung abgelehnt oder übergangen wird.

2. Verfahren nach Anspruch 1,
**dadurch gekennzeichnet,**
**daß** im erweiterten Teil (EXP) der Meldung (EXOP) verschiedene Zusatzprotokollkennungen (GEID, GEID') zur Identifikation mehrerer Protokollerweiterungen gemeinsam übertragen werden.

3. Verfahren nach Anspruch 1 oder 2,
**dadurch gekennzeichnet,**
**daß** im erweiterten Teil (EXP) der Meldung (EXOP) der Erweiterungstyp (EXTY, EXTY') der Protokollerweiterung mit der jeweiligen Zusatzprotokollkennung (GEID, GEID') übertragen wird.

4. Verfahren nach einem der vorhergehenden Ansprüche,
**dadurch gekennzeichnet,**
**daß** von einem Empfänger der Meldung (EXOP) die Protokollkennung (OBID) des Übertragungsprotokolls überprüft und bei deren Kenntnis die Zusatzprotokollkennung (GEID, GEID') ausgewertet wird.

5. Verfahren nach Anspruch 4,
**dadurch gekennzeichnet,**
**daß** bei bekannter Zusatzprotokollkennung (GEID, GEID') der Erweiterungstyp (EXTY, EXTY') der Protokollerweiterung vom Empfänger geprüft und bei Kenntnis angenommen wird.

6. Verfahren nach Anspruch 4,
**dadurch gekennzeichnet,**
**daß** bei unbekannter Zusatzprotokollkennung (GEID, GEID') der Erweiterungstyp (EXTY, EXTY') der Protokollerweiterung vom Empfänger abgelehnt oder übergangen wird.

7. Verfahren nach einem der vorhergehenden Ansprüche,
**dadurch gekennzeichnet,**
**daß** die Zusatzprotokollkennung (GEID, GEID') eine Betreiberkennung(OID, OID') enthält, durch die der Netzbetreiber eines Telekommunikationsnetzes, der die Protokollerweiterung veranlaßt hat, identifiziert wird.

8. Verfahren nach Anspruch 7,
**dadurch gekennzeichnet,**
**daß** durch die Zusatzprotokollkennung (GEID, GEID') das Basis-Übertragungsprotokoll eines länderübergreifenden Mobilfunknetzes und durch die Betreiberkennung (OID, OID') der Netzbetreiber des Mobilfunknetzes im jeweiligen Land identifiziert werden.

9. Verfahren nach einem der vorhergehenden Ansprüche,
**dadurch gekennzeichnet,**
**daß** die Zusatzprotokollkennung (GEID, GEID') eine Erweiterungskennung(EID, EID') enthält, durch die der Erweiterungstyp (EXTY, EXTY') der Protokollerweiterung festgelegt wird.

10. Verfahren nach einem der vorhergehenden Ansprüche,
**dadurch gekennzeichnet,**
**daß** als Zusatzprotokollkennung (GEID, GEID') ein aus mehreren Stellen bestehender ganzzahliger Code verwendet wird.

## Claims

1. Method for transmitting messages (EXOP) between telecommunications networks with individual extensions of the transmission protocol with open interfaces in accordance with a standardised transmission protocol which is identified by means of a protocol (object) identifier (OBID) which is prefixed to the message (EXOP) and sent prior to said message or together with it,
**characterised in that**
in an extended part (EXP) of the message (EXOP) at least one supplementary protocol identifier (GEID, GEID') is transmitted by means of which an individual extension of the transmission protocol specified by means of the protocol identifier (OBID) is identified in each case,
the supplementary protocol identifier (GEID, GEID') being a universal identifier which is composed of a simple extension identifier (EID, EID') and of an individual operator identifier (OID, OID'),
a check then being made to determine whether the ascertained operator identifier (OID) is known and if it is known the extension identifier (EID) is read from the supplementary identifier (GEID),
the protocol extension contained in the message being rejected or skipped in the event that the operator identifier (OID) is not known.

2. Method according to claim 1,
**characterised in that**
different supplementary protocol identifiers (GEID, GEID') for identifying a plurality of protocol extensions are transmitted together in the extended part (EXP) of the message (EXOP).

3. Method according to claim 1 or 2,
**characterised in that**
the extension type (EXTY, EXTY') of the protocol extension is transmitted together with the respective supplementary protocol identifier (GEID, GEID') in the extended part (EXP) of the message (EXOP).

4. Method according to one of the preceding claims,
**characterised in that**
the protocol identifier (OBID) of the transmission protocol is checked by a recipient of the message (EXOP) and if it is known the supplementary protocol identifier (GEID, GEID') is evaluated.

5. Method according to claim 4,
**characterised in that**
if the supplementary protocol identifier (GEID, GEID') is known, the extension type (EXTY, EXTY') of the protocol extension is checked by the recipient and if known is accepted.

6. Method according to claim 4,
**characterised in that**
if the supplementary protocol identifier (GEID, GEID') is not known, the extension type (EXTY, EXTY') of the protocol extension is rejected or skipped by the recipient.

7. Method according to one of the preceding claims,
**characterised in that**
the supplementary protocol identifier (GEID, GEID') includes an operator identifier (OID, OID') by means of which the network operator of a telecommunications network is identified, said operator being responsible for initiating the protocol extension.

8. Method according to claim 7,
**characterised in that**
the basic transmission protocol of an international mobile radio network is identified by means of the supplementary protocol identifier (GEID, GEID') and the network operator of the mobile radio network in the respective country is identified by means of the operator identifier (OID, OID').

9. Method according to one of the preceding claims,
**characterised in that**
the supplementary protocol identifier (GEID, GEID') includes an extension identifier (EID, EID') by means of which the extension type (EXTY, EXTY') of the protocol extension is specified.

10. Method according to one of the preceding claims,
**characterised in that**
an integer code consisting of a plurality of digits is used as the supplementary protocol identifier (GEID, GEID').

## Revendications

1. Procédé pour la transmission de messages (EXOP) entre des réseaux de télécommunication avec des extensions individuelles du protocole de transmission avec des interfaces ouvertes selon un protocole de transmission normalisé, qui est identifié par un identificateur de protocole (OBID), qui est placé en tête du message (EXOP) et est envoyé avant lui ou en même temps que lui,
**caractérisé en ce que**,
dans la partie élargie (EXP) du message (EXOP), au moins un identificateur de protocole supplémentaire (GEID, GEID') est transmis, par lequel une extension individuelle du protocole de transmission défini par l'identificateur de protocole (OBID) est identifiée,
l'identificateur de protocole supplémentaire (GEID, GEID') étant un identificateur universel, qui est composé d'un identificateur d'extension (EID, EID') simple et d'un identificateur d'exploitant (OID, OID') individuel, moyennant quoi on vérifie ensuite si l'identificateur d'exploitant (OID) déterminé est connu, et, s'il est connu, l'identificateur d'extension (EID) est lu à partir de l'identificateur de protocole supplémentaire (GEID),
moyennant quoi, dans le cas où l'identificateur d'exploitant (OID) n'est pas connu, l'extension de protocole contenue dans le message est refusée ou sauté.

2. Procédé selon la revendication 1,
**caractérisé en ce que**,
dans la partie élargie (EXP) du message (EXOP), différents identificateurs de protocole supplémentaires (GEID, GEID') sont transmis ensemble pour l'identification de plusieurs extensions de protocole.

3. Procédé selon la revendication 1 ou 2,
**caractérisé en ce que**,
dans la partie élargie (EXP) du message (EXOP), le type d'extension (EXTY, EXTY') de l'extension de protocole est transmis avec l'identificateur de protocole supplémentaire respectif (GEID, GEID').

4. Procédé selon l'une quelconque des revendications précédentes,
**caractérisé en ce que**,
l'identificateur de protocole (OBID) du protocole de transmission est vérifié par un destinataire du message (EXOP) et si on le connaît, l'identificateur de protocole supplémentaire (GEID, GEID') est analysé.

5. Procédé selon la revendication 4,
**caractérisé en ce que**,
lorsque l'identificateur de protocole supplémentaire est connu (GEID, GEID'), le type d'extension (EXTY, EXTY') de l'extension de protocole est testé par le destinataire et accepté en cas de connaissance.

6. Procédé selon la revendication 4,
**caractérisé en ce que**,
lorsque un identificateur de protocole supplémentaire est non connu (GEID, GEID'), le type d'extension (EXTY, EXTY') de l'extension de protocole est refusé ou sauté par le récepteur.

7. Procédé selon l'une quelconque des revendications précédentes,
**caractérisé en ce que**,
l'identificateur de protocole supplémentaire (GEID, GEID') contient un identificateur d'exploitant (OID, OID'), par lequel l'exploitant d'un réseau de télécommunication qui a initié l'extension de protocole est identifié.

8. Procédé selon la revendication 7,
**caractérisé en ce que**,
le protocole de transmission de base d'un réseau de téléphonie mobile supranational est identifié par l'identificateur de protocole supplémentaire (GEID, GEID') et l'exploitant de réseau du réseau de téléphonie mobile dans le pays respectif par le code d'exploitant (OID, OID').

9. Procédé selon l'une quelconque des revendications précédentes,
**caractérisé en ce que**,
l'identificateur de protocole supplémentaire (GEID, GEID') contient un identificateur d'extension (EID, EID'), par lequel le type d'extension (EXTY, EXTY') de l'extension de protocole est défini.

10. Procédé selon l'une quelconque des revendications précédentes,
**caractérisé en ce que**,
un code à nombre entier et comprenant plusieurs chiffres est utilisé comme identificateur de protocole supplémentaire (GEID, GEID').
